# EUROPEAN PATENT SPECIFICATION

(11) **EP 0 943 500 B1**
(45) Date of publication and mention of the grant of the patent: **22.01.2003**
(21) Application number: 98105109.7
(22) Date of filing: 20.03.1998
(51) Int. Cl.: B60R 21/20

(54) **Air bag mounting structure for passenger-side air bag device**
Airbagmontageeinheit für Passagier-Airbag
Dispositif de montage d'air-bag pour air-bag pour passager

(43) Date of publication of application: 22.09.1999
(73) Proprietor: TAKATA CORPORATION, Minato-ku, Tokyo 106 (JP)
(72) Inventor: Nariyasu, Tsutomu, Echigawa-cho, Echi-gun, Shiga (JP)
(74) Representative: Kraus, Walter, Dr.

(56) References cited:
- EP-A- 0 739 788
- US-A- 5 431 432
- US-A- 5 460 400
- US-A- 5 603 523

## Description

### FIELD OF THE INVENTION

The present invention relates to an air bag device installed for a passenger seat in a vehicle, and more particularly to a structure for fixing a peripheral edge of an air bag to a retainer of an air bag device.

### BACK GROUND OF THE INVENTION

A conventional air bag mounting structure for a passenger-side air bag device (e.g. JP-A-07-69157) will be described with reference to Figs. 5 and 6. An inflator 12 is arranged in a rear portion (the innermost portion) of a retainer 10. A passenger-side air bag 14 is provided with four flaps 18, 20, 22, 24 arranged around a gas inlet 16 of the air bag 14. The edge portions of flaps 18 - 24 are turned up and sewn on the respective lapped portions of the flaps so as to form narrow saccate portions 18a, 20a, 22a, and 24a. Numeral 26 designates seams.

Plates 28, 30 are inserted into the respective saccate portions 18a -24a. The plates 28, 30 are each provided with rivet holes 32 formed therein. The flaps 18-24 of the air bag 14 and the retainer 10 are also provided with rivet holes 34 formed in the same arrangement of the rivet holes 32.

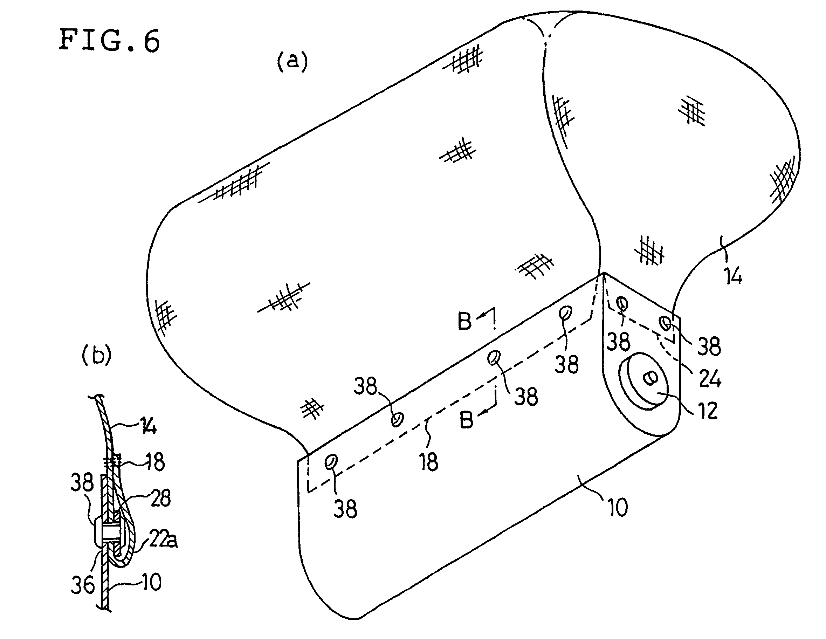

The saccate portions 18a - 24a with the plates 28, 30 therein are brought in contact with the inner surfaces of the front portion of the retainer 10 and fastened together by blind rivets 38. In this way, the air bag 14 is fixed to the retainer 10 as shown in Fig. 6.

In this conventional structure in a passenger-side air bag device, there are spaces C between the adjacent flaps 18 - 24. Therefore, there is a possibility of gas leaking from the spaces C when the inflator 12 is activated. For this, it is required to employ a large-capacity inflator as the inflator 12 for compensating for the amount of gas to be leaked.

An air bag mounting structure according to the preamble of claim 1 is known from US 5 603 523 A.

### OBJECT AND SUMMARY OF THE INVENTION

It is an object of the present invention to provide an air bag mounting structure for a passenger-side air bag device having little possibility of gas leaking from portions where a passenger air bag is mounted to a retainer.

In an air bag mounting structure for a passenger-side air bag device according to the present invention, a portion around a gas inlet of an air bag is fixed to a retainer. The structure is characterized by the features of claims 1. The air bag comprises a sleeve-like mouth surrounding the periphery of said gas inlet, an end portion of said mouth being inserted into a mounting frame and turned up to sandwich said frame. The frame and said mouth are inserted into said retainer in such a manner that the mouth is disposed between said frame and the retainer, and said frame is fixed to the retainer by fastening members penetrating the retainer, whereby said air bag is fixed to said retainer.

In the air bag mounting structure according to the present invention, the sleeve-like mouth surrounds the frame portion of the mounting frame and the mouth is disposed between the neck of the retainer and the flame portion of the mounting frame all around thereof. The whole outer periphery of the frame portion and the whole inner periphery of the neck are sealingly closed by the mouth. That is, the mouth functions as a sealing member. The result is little gas leakage from a portion where the air bag is attached.

### BRIEF DESCRIPTION OF THE DRAWINGS

Fig. 1 is an exploded perspective view showing an embodiment,
Fig. 2 is an exploded perspective view showing the embodiment,
Fig. 3 is a partially cutaway perspective view showing the embodiment,
Fig. 4 is a sectional view taken along a line IV-IV of Fig. 3,

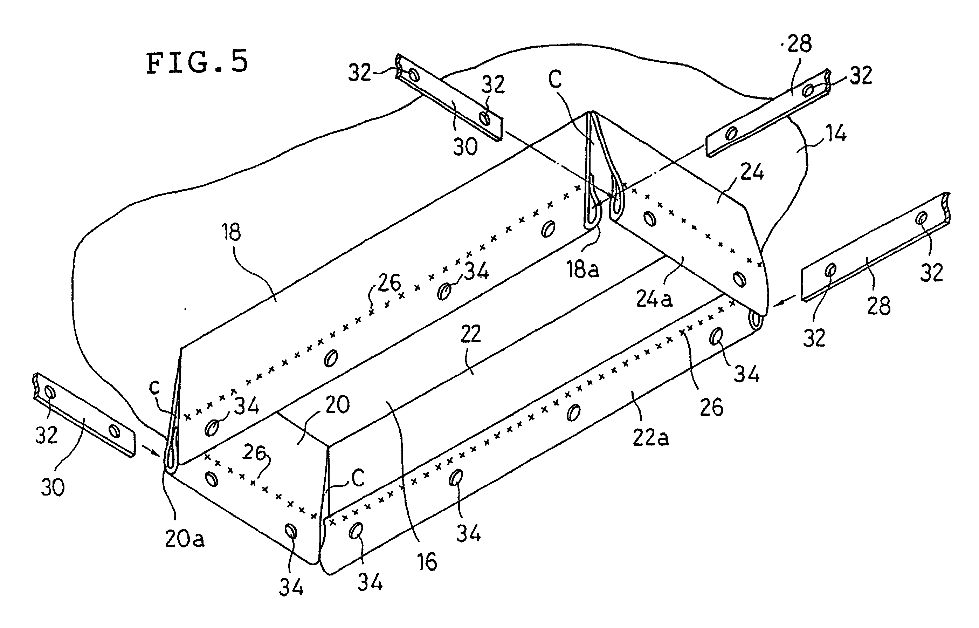

Fig. 5 is an exploded perspective view showing a conventional example, and
Fig. 6a is a perspective view showing the conventional example and Fig. 6b is a sectional view taken along a line B-B of Fig. 6a.

### DESCRIPTION OF THE PREFERRED EMBODIMENTS

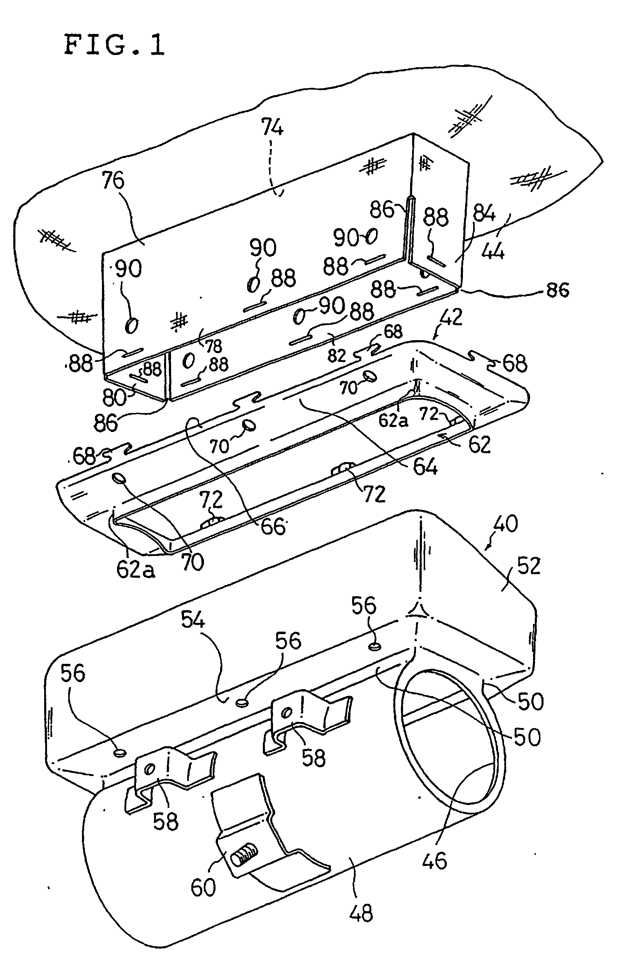

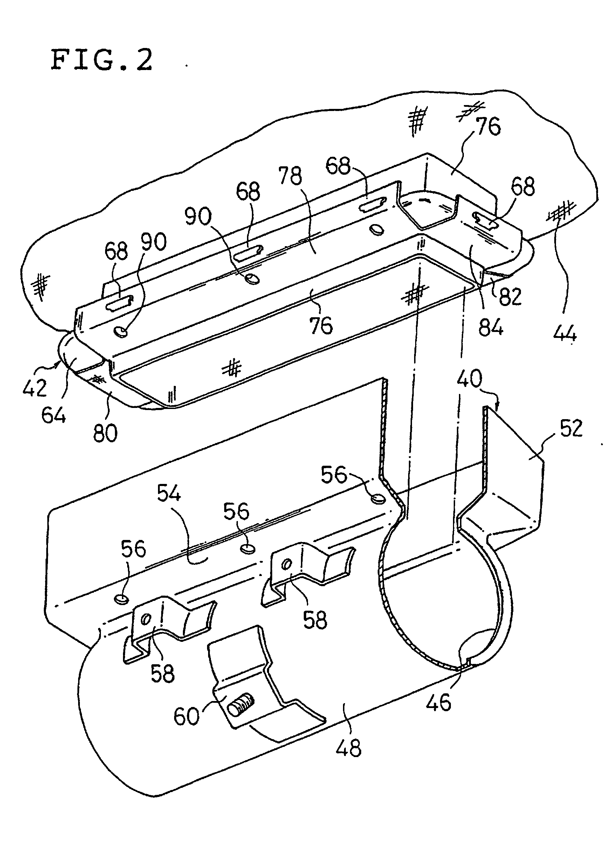

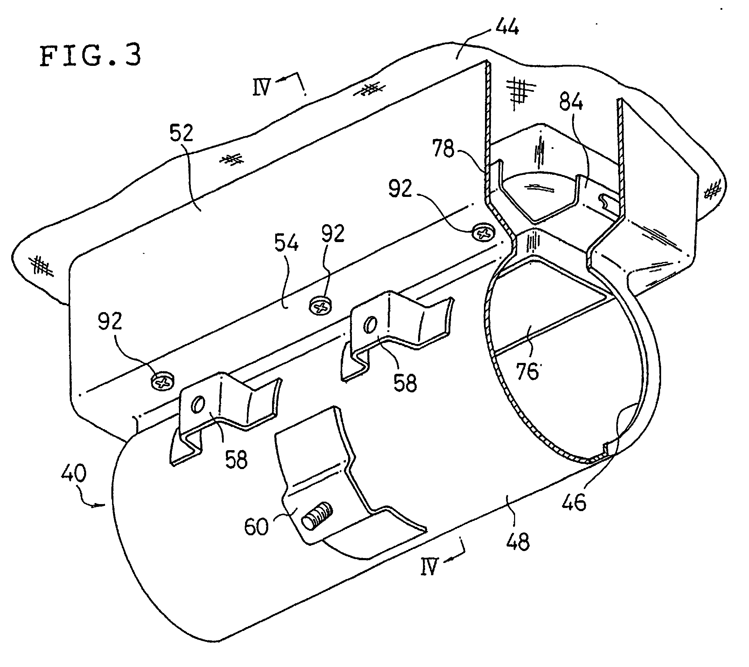

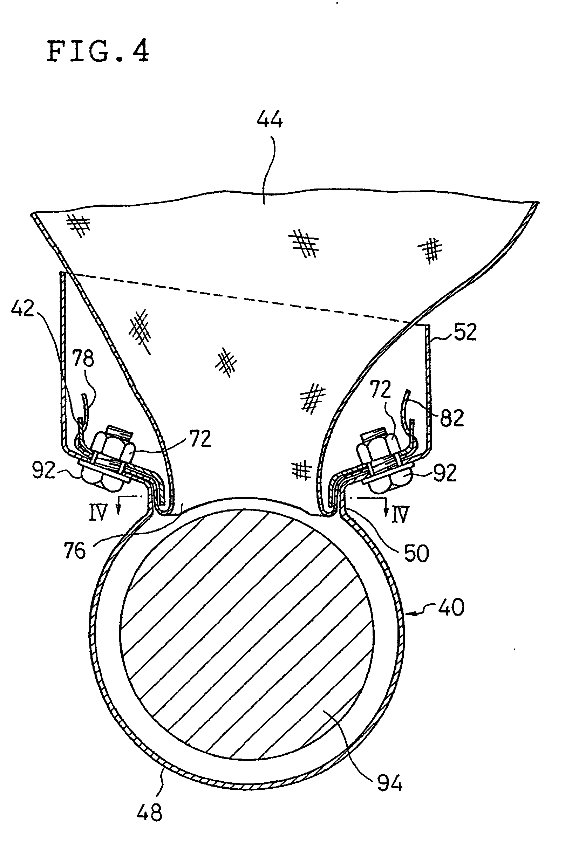

Hereinafter, an embodiment of the present invention will be described with reference to the attached drawings. Figs. 1 and 2 are exploded perspective views showing an air bag mounting structure for a passenger-side air bag device according to the embodiment of the present invention, Fig. 3 is a partially cutaway perspective view showing the same structure, and Fig. 4 is a sectional view taken along a line IV-IV of Fig. 3.

In this embodiment, a passenger air bag 44 is mounted to a retainer 40 through a mounting frame 42.

The retainer 40 comprises an inflator housing 48 having an opening 46 through which an inflator is inserted, a neck 50 connected to the inflator housing 48, and an air bag housing 52 connected to the neck 50.

The inflator housing 48 is formed in a cylindrical drum-like configuration and has the opening 46 for the inflator formed in one of end faces thereof.

The air bag housing 52 is formed in a rectangular container-like configuration to have a dimension wider than the neck 50. The air bag housing 52 has a collar portion 54 connected to the neck 50, the collar portion constituting the bottom of the air bag housing 52. The collar portion 54 is provided with bolt holes 56 formed therein.

Numerals 58, 60 designate brackets for securing the passenger-side air bag device to a member of a vehicle body.

The mounting frame 42 comprises a frame portion 62 which is inserted into the neck 50, a flange 64 extending outwardly from the frame portion 62, an uprising portion 66 standing on the peripheral edge of the flange 64, and hooks 68 projecting from the uprising portion 66.

The flange 64 is set to be overlaid on the collar portion 54 and is provided with holes 70 at portions corresponding to the bolt holes 56. Nuts 72 are fixed to the frame 42 coaxially with the respective holes 70 by welding or the like.

The passenger air bag 44 is provided with a quadrangular mouth 76 around a gas inlet 74 and the quadrangular mouth 76 has four flaps 78, 80, 82, 84 extending from the peripheral edge thereof. The flaps 78 through 84 are separated from each other by slits 86. The flaps 78 and 82 are each provided with hook entries 88 and bolt holes 90 to be aligned with the bolt holes 56. The flaps 80, 84 are each provided with a hook entry 88 only.

To mount the air bag 44 to the retainer 40, first the flaps 78 through 84 and the mouth 76 are inserted into the frame portion 62 of the mounting frame 42. After the mouth 76 is inserted into the frame portion 62, the mouth 76 are turned up to sandwich the frame portion 62 from the inside and the outside. The flaps 78 through 84 are brought in contact with the outer surface of the flange 64 and the uprising portion 66 so that the hooks 68 are inserted into the hook entries 88.

Then, the air bag 44 with the frame 42 is inserted into the retainer 40 in such a manner that the frame portion 62 covered with the mouth 76 is inserted into the neck 50. The flange 64 is disposed to face the collar portion 54. Therefore, the flaps 78 through 84 are in the state sandwiched between the flange 64 and the collar portion 54. In this state, bolts 92 are screwed up into the nuts 72 through the bolt holes 56, 90. In this way, the air bag 44 is fixedly connected to the retainer 40.

To complete a passenger-side air bag device, the air bag 44 is folded and accommodated in the air bag housing 52. Then, a lid (not shown) is put on the air bag housing 52 and an inflator 94 is installed into the retainer 40.

In this structure for fixing the air bag 44 to the retainer 40 as mentioned above, the frame portion 62 of the flame 42 is inserted into the neck 50 so that the mouth 76 exists over the whole outer periphery of the frame portion 62 and the whole inner periphery of the neck 50. That is, the mouth 76 exists over the outer surfaces of corners 62a of the frame portion 62, thereby improving the gas seal performance between the frame portion 62 and the neck 50 and eliminating the possibility of gas leaking outside from the gap between the frame 42 and the neck 50.

In the above embodiment, the flaps 78 through 84 are held between the flange 64 and the collar portion 54, thereby obtaining high mounting strength of the air bag 44. The hook entries 88 and the hooks 68 are engaged with each other, thereby significantly improving the work efficiency of attaching the air bag 44 to the retainer 40 and further improving the mounting strength between the air bag 44 and the retainer 40.

As mentioned above, according to the structure for fixing the air bag of the present invention, there is no possibility of gas leaking outside from the gap between the mouth of the air bag and the neck of the retainer so that the gas pressure from the inflator can be effectively used as the development pressure of the air bag. Therefore, a small-capacity inflator can be employed as the inflator for this air bag device.

## Claims

1. An air bag mounting structure for a passenger-side air bag, comprising:
a retainer (40) having an inflator housing (48) for receiving an inflator (94) therein, and an air bag housing (52),
an air bag (44) disposed inside the air bag housing (52) and having a gas inlet for receiving a gas therein, and
a mounting frame (42) situated inside the air bag housing (52),
said air bag mounting structure being **characterized in that** said retainer (40) has a neck portion (50) formed at one side of the inflator housing (48); said air bag housing (52) is connected to the neck portion (50) at a side opposite to the inflator housing (48) and has a collar portion (54) extending laterally outwardly from the neck portion (50) above the inflator housing (48); and said mounting frame (42) has a flange (64) disposed on the collar portion (54) above the neck portion (50) so that when the air bag (44) is attached to the retainer (40), a mouth (76) of the air bag (44) around the gas inlet is sandwiched between the collar portion (54) and the flange (64) in the air bag housing (52).

2. An air bag mounting structure for a passenger-side air bag as claimed in claim 1, wherein said mounting frame (42) includes a center opening inside the flange (64), said mouth (76) of the air bag (44) being disposed under the flange (64) by passing through the center opening and being bent laterally outwardly from the center opening so that the flange (64) with the mouth (76) is fixed to the air bag housing (52).

3. An air bag mounting structure for a passenger-side air bag as claimed in claim 1 or 2, further comprising fastening members (92) penetrating the collar portion (54) and the mouth (76) of the air bag (44) and being fixed to the mounting frame (42).

4. An air bag mounting structure for a passenger-side air bag as claimed in any one of claims 1 to 3, wherein said mounting frame (42) further includes a frame portion (62) situated radially inside the flange (64) and extending downwardly therefrom to define a center opening, said frame portion (62) being disposed in the neck portion (50).

5. An air bag mounting structure for a passenger-side air bag as claimed in any one of claims 1 to 4, wherein said mouth (76) is provided with flaps (78 to 84) extending from the peripheral edge of said mouth (76), said flaps (78 to 84) being disposed between said flange (64) of said mounting frame (42) and said collar portion (54) of said retainer (40).

6. An air bag mounting structure for a passenger-side air bag as claimed in claim 5, wherein said fastening members (92) penetrate said collar portion (54) and said flaps (78 to 84).

7. An air bag mounting structure for a passenger-side air bag as claimed in claim 5 or 6, wherein said mounting frame (42) is provided with hooks (68), said hooks (68) being inserted into hook entries (88) disposed on said flaps (78 to 84) whereby said flaps (78 to 84) engage with the mounting frame (42).

## Patentansprüche

1. Airbagmontageeinheit für einen passagierseitigen Airbag, welche Folgendes umfasst:
eine Halterung (40) mit einem Inflatorgehäuse (48) zur Aufnahme eines Inflators (94) darin und einem Airbaggehäuse (52),
einen in dem Airbaggehäuse (52) angeordneten Airbag (44) mit einem Gaseinlass zum Empfang eines Gases, und
einen innerhalb des Airbaggehäuses (52) befindlichen Montagerahmen (42),
wobei die Airbagmontageeinheit **dadurch gekennzeichnet ist, dass** die Halterung (40) einen auf einer Seite des Inflatorgehäuses (48) ausgeformten Halsbereich (50) hat, das Airbaggehäuse (52) mit dem Halsbereich (50) auf einer dem Inflatorgehäuse (48) gegenüberliegenden Seite verbunden ist und einen Kragenbereich (54), der sich von dem Halsbereich (50) lateral auswärts über dem Inflatorgehäuse (48) erstreckt, aufweist, und der Montagerahmen (42) einen auf dem Kragenbereich (54) über dem Halsbereich (50) angebrachten Flansch (64) aufweist, so dass, wenn der Airbag (44) an der Halterung (40) angebracht wird, ein Mund (76) des Airbags (44) um den Gaseinlass zwischen dem Kragenbereich (54) und dem Flansch (64) im Airbaggehäuse (52) eingebracht ist.

2. Eine Airbagmontageeinheit für einen passagierseitigen Airbag gemäß Anspruch 1, wobei der Montagerahmen (42) eine Mittelöffnung im Flansch (64) beinhaltet, der Mund (76) des Airbags (44) durch Durchgang durch die Mittelöffnung unter dem Flansch (64) angeordnet und lateral von der Mittelöffnung nach außen gebogen ist, so dass der Flansch (64) mit dem Mund (76) am Airbaggehäuse (52) befestigt ist.

3. Eine Airbagmontageeinheit für einen passagierseitigen Airbag gemäß Anspruch 1 oder 2, welches weiterhin Befestigungselemente (92) umfasst, welche den Kragenbereich (54) und den Mund (76) des Airbags (44) durchdringen und am Montagerahmen (42) befestigt sind.

4. Airbagmontageeinheit für einen passagierseitigen Airbag gemäß einem der Ansprüche 1 bis 3, wobei der Montagerahmen (42) weiterhin einen radial innerhalb des Flansches (64) befindlichen und von dort zur Festlegung einer Mittelöffnung hinunterreichenden Rahmenbereich (62) beinhaltet, wobei der Rahmenbereich (62) in dem Halsbereich (50) angeordnet ist.

5. Airbagmontageeinheit für einen passagierseitigen Airbag gemäß einem der Ansprüche 1 bis 4, wobei der Mund (76) mit sich von dem äußeren Rand des Mundes (76) erstreckenden Klappen (78-84) ausgestattet ist, wobei die Klappen (78-84) zwischen dem Flansch (64) des Montagerahmens (42) und dem Kragenbereich (54) der Halterung (40) angeordnet sind.

6. Airbagmontageeinheit für einen passagierseitigen Airbag gemäß Anspruch 5, wobei die Befestigungselemente (92) den Kragenbereich (54) und die Klappen (78-84) durchdringen.

7. Airbagmontageeinheit für einen passagierseitigen Airbag gemäß Anspruch 5 oder 6, wobei der Montagerahmen (42) mit Haken (68) ausgestattet ist, und wobei die Haken (68) in auf den Klappen (78-84) angebrachte Hakenöffnungen (88) eingesetzt sind, wodurch die Klappen (78-84) mit dem Montagerahmen (42) in Eingriff gelangen.

## Revendications

1. Structure de montage d'airbag pour un airbag côté passager, comprenant :
un élément de retenue (40) ayant un boîtier de gonfleur (48) pour recevoir à l'intérieur un gonfleur (94), et un boîtier d'airbag (52),
un airbag (44) disposé à l'intérieur du boîtier d'airbag (52) et ayant une entrée de gaz afin de recevoir un gaz à l'intérieur, et
un cadre de montage (42) situé à l'intérieur du boîtier d'airbag (52),
ladite structure de montage d'airbag étant **caractérisée en ce que** ledit élément de retenue (40) a une partie rétrécie (50) formée sur un côté du boîtier de gonfleur (48) ; ledit boîtier d'airbag (52) est connecté à la partie rétrécie (50) à un côté opposé au boîtier de gonfleur (48) et comporte une partie en collerette (54) qui s'étend latéralement vers l'extérieur depuis la partie rétrécie (50) au-dessus du boîtier de gonfleur (48) ; et ledit cadre de montage (42) a une bride (64) disposée sur la partie en collerette (54) au-dessus de la partie rétrécie (50), de sorte que lorsque l'airbag (44) est attaché à l'élément de retenue (40), une embouchure (76) de l'airbag (44) autour de l'entrée de gaz est prise en sandwich entre la partie en collerette (54) et la bride (64) dans le boîtier d'airbag (52).

2. Structure de montage d'airbag pour un airbag côté passager, selon la revendication 1, dans lequel ledit cadre de montage (42) inclut une ouverture centrale à l'intérieur de la bride (64), ladite embouchure (76) de l'airbag (44) étant disposée sous la bride (64) en traversant l'ouverture centrale et en étant recourbée latéralement vers l'extérieur depuis l'ouverture centrale de sorte que la bride (64) avec l'embouchure (76) est fixée sur le boîtier d'airbag (52).

3. Structure de montage d'airbag pour un airbag côté passager, selon l'une ou l'autre des revendications 1 et 2, comprenant en outre des éléments de fixation (92) qui pénètrent la partie en collerette (54) et l'embouchure (76) de l'airbag (44) et qui sont fixés au cadre de montage (42).

4. Structure de montage d'airbag pour un airbag côté passager, selon l'une quelconque des revendications 1 à 3, dans lequel ledit cadre de montage (42) inclut encore une partie de cadre (62) située radialement à l'intérieur de la bride (64), et s'étendant vers le bas depuis celle-ci pour définir une ouverture centrale, ladite partie de cadre (62) étant disposé dans la partie rétrécie (50).

5. Structure de montage d'airbag pour un airbag côté passager, selon l'une quelconque des revendications 1 à 4, dans lequel ladite embouchure (76) est pourvue de volets (78 à 84) qui s'étendent depuis le bord périphérique de ladite embouchure (76), lesdits volets (78 à 84) étant disposés entre ladite bride (64) dudit cadre de montage (42) et ladite partie en collerette (54) dudit élément de retenue (40).

6. Structure de montage d'airbag pour un airbag côté passager, selon la revendication 5, dans lequel lesdits éléments de fixation (92) pénètrent ladite partie en collerette (54) et lesdits volets (78 à 84).

7. Structure de montage d'airbag pour un airbag côté passager, selon l'une ou l'autre des revendications 5 et 6, dans lequel ledit cadre de montage (42) est pourvu de crochets (68), lesdits crochets (68) étant introduits dans des entrées à crochet (88) disposées sur lesdits volets (78 à 84), grâce à quoi lesdits volets (78 à 84) sont engagés avec le cadre de montage (42).
